(19) Europäisches Patentamt
European Patent Office
Office européen des brevets

(11) **EP 4 549 885 A1**

(12) **EUROPEAN PATENT APPLICATION**
published in accordance with Art. 153(4) EPC

(43) Date of publication:
**07.05.2025 Bulletin 2025/19**

(21) Application number: **23841933.7**

(22) Date of filing: **05.06.2023**

(51) International Patent Classification (IPC):
*G01D 21/02* (2006.01)    *H04N 7/00* (2011.01)

(52) Cooperative Patent Classification (CPC):
**G01D 21/02; H04N 7/00**

(86) International application number:
**PCT/CN2023/098285**

(87) International publication number:
**WO 2024/016866 (25.01.2024 Gazette 2024/04)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **20.07.2022 CN 202210862253**

(71) Applicant: **Huawei Technologies Co., Ltd.
Shenzhen, Guangdong 518129 (CN)**

(72) Inventors:
• **CHEN, Shangmin
Shenzhen, Guangdong 518129 (CN)**

• **DAOJIAN, Dingjiu
Shenzhen, Guangdong 518129 (CN)**
• **XIAO, Weihong
Shenzhen, Guangdong 518129 (CN)**
• **XUE, Xiaogang
Shenzhen, Guangdong 518129 (CN)**
• **LIN, Hongchao
Shenzhen, Guangdong 518129 (CN)**

(74) Representative: **Gill Jennings & Every LLP
The Broadgate Tower
20 Primrose Street
London EC2A 2ES (GB)**

(54) **COMMUNICATION SENSING SYSTEM, TOWER SENSING APPARATUS AND ANTENNA SENSING APPARATUS**

(57)    A communication sensing system (100), a tower sensing apparatus, and an antenna sensing apparatus are provided, which relates to the communication field. The communication sensing system includes an antenna (103), a tower sensing apparatus (101), and an antenna sensing apparatus (102). The tower sensing apparatus (101) includes a first processor (201), a first communication module (202), and a first sensing module (203) configured to obtain tower status information of a communication tower (105). The antenna sensing apparatus (102) includes a second processor (301), a second communication module (302), and a second sensing module (303) configured to obtain antenna status information of the antenna (103). The first communication module (202) communicates with the second communication module (203). The tower sensing apparatus (101) may be used to obtain the tower status information, and the antenna sensing apparatus (102) may be used to obtain the antenna status information. This can effectively improve efficiency of managing the communication tower (105) and the antenna (103), and reduce management costs. **In** addition, because the first communication module (202) and the second communication module (203) may communicate with each other, information can be shared between the tower sensing apparatus (101) and the antenna sensing apparatus (102).

EP 4 549 885 A1

FIG. 4

## Description

This application claims priority to Chinese Patent Application No. 202210862253.4, filed with the China National Intellectual Property Administration on July 20, 2022 and entitled "COMMUNICATION SENSING SYSTEM, TOWER SENSING APPARATUS, AND ANTENNA SENSING APPARATUS", which is incorporated herein by reference in its entirety.

## TECHNICAL FIELD

Embodiments of this application relate to the communication field, and in particular, to a communication sensing system, a tower sensing apparatus, and an antenna sensing apparatus.

## BACKGROUND

With continuous development of a mobile communication network, a coverage area of the mobile communication network is increasingly large, and a quantity of communication towers for mounting communication antennas is also increasing. The communication tower is infrastructure of the mobile communication network. A security status of the communication tower directly affects work stability of the mobile communication network.

In a conventional technology, a communication tower is manually inspected. Efficiency is low, labor costs are high, and a related status of a communication antenna on the tower cannot be sensed.

## SUMMARY

This application provides a communication sensing system, a tower sensing apparatus, and an antenna sensing apparatus, to effectively improve efficiency of managing a communication tower and an antenna.

According to a first aspect, this application provides a communication sensing system. The communication sensing system includes an antenna, a tower sensing apparatus, and an antenna sensing apparatus. The antenna, the tower sensing apparatus, and the antenna sensing apparatus are disposed on a communication tower.

The tower sensing apparatus includes a first processor, a first communication module, and a first sensing module configured to obtain tower status information of the communication tower. The antenna sensing apparatus includes a second processor, a second communication module, and a second sensing module configured to obtain antenna status information of the antenna.

The first communication module and the first sensing module are both coupled to the first processor. The second communication module and the second sensing module are both coupled to the second processor, and the first communication module communicates with the second communication module. The tower status information is information associated with the communication tower, and includes but is not limited to posture information of the communication tower and/or environmental parameter information of an environment in which the communication tower is located. The antenna status information is information associated with the antenna, and includes but is not limited to posture information of the antenna and/or environmental parameter information of an environment in which the antenna is located.

In this solution, a tower sensing apparatus may be used to obtain tower status information, and an antenna sensing apparatus may be used to obtain antenna status information. Compared with manual inspection, this solution effectively improves efficiency of managing the communication tower and the antenna and reduces management costs. The first communication module and the second communication module may communicate with each other, that is, information can be shared between the tower sensing apparatus and the antenna sensing apparatus. Status information obtained by the two apparatuses may be managed in a unified manner, further helping improve efficiency of managing the communication tower and the antenna.

In some possible implementations of the first aspect, a radome used to protect the antenna includes a peripheral housing, a bottom cover, and a top cover. In this embodiment of this application, the antenna sensing apparatus is disposed in the housing of the radome of the antenna, on the outer side of the housing, or on the top cover of the radome, reducing signal interference and shielding, and ensuring normal signal sending and receiving of the first communication module in the antenna sensing apparatus. Further, the antenna sensing apparatus may alternatively be disposed at another position such as the outer side of the bottom cover, provided that normal signal sending and receiving of the first communication module in the antenna sensing apparatus can be ensured.

In some possible implementations of the first aspect, the tower sensing apparatus is disposed on the tower top of the communication tower. Because the tower top is not blocked by another object, environmental conditions for signal sending and receiving of the tower sensing apparatus are best, so that precision of the tower status information obtained by the tower sensing apparatus can be ensured.

In some possible implementations of the first aspect, the tower status information is information associated with the communication tower, and includes but is not limited to posture information of the communication tower and/or environmental parameter information of an environment in which the communication tower is located. The posture information of the communication tower includes at least one of the following: a longitude, a latitude, an altitude, a downtilt, a roll angle, and an azimuth of the communication tower. The environmental parameter information includes at least one of the following: barometric pressure, temperature, humidity, smoke, air pollutant, wind speed, wind direction, wind load, rainfall, biological intrusion, and vibration.

In some possible implementations of the first aspect, the first sensing module includes at least one of the following: a first positioning module, a first barometric pressure sensing module, a first gravitational acceleration sensing module, a first temperature sensing module, a first humidity sensing module, a first smoke sensing module, a first air quality sensing module, a first wind speed sensing module, a first wind direction sensing module, a first rainfall sensing module, a first infrared sensing module, and a first vibration sensing module.

In this solution, the first sensing module may obtain the tower status information. The first positioning module is configured to obtain the posture information of the communication tower, where the posture information includes information about at least one of an altitude, a longitude, a latitude, an azimuth, and the like. The first barometric pressure sensing module is configured to obtain a first barometric pressure value corresponding to a mounting position of the first barometric pressure sensing module. The first gravitational acceleration sensing module is configured to obtain tilt status information corresponding to a mounting position of the first gravitational acceleration sensing module, where the tilt status information includes a downtilt and the like. The first temperature sensing module is configured to obtain an ambient temperature corresponding to a mounting position of the first temperature sensing module. The first humidity sensing module is configured to obtain ambient humidity corresponding to a mounting position of the first humidity sensing module. The first smoke sensing module is configured to detect presence of smoke of a fire in a mounting position of the first smoke sensing module. The first air quality sensing module is configured to detect an air pollutant concentration status at a mounting position of the first air quality sensing module. The first wind speed sensing module is configured to detect a wind speed corresponding to a mounting position of the first wind speed sensing module. The first wind direction sensing module is configured to detect a wind direction corresponding to a mounting position of the first wind direction sensing module. The first rainfall sensing module is configured to detect rainfall corresponding to a mounting position of the first rainfall sensing module. The first infrared sensing module is configured to detect presence of biological intrusion in a mounting position of the first infrared sensing module. The first vibration sensing module is configured to detect a vibration status corresponding to a mounting position of the first vibration sensing module.

In some possible implementations of the first aspect, the tower sensing apparatus further includes a first information storage module and/or a first power module configured to provide electric energy for the tower sensing apparatus, and the first power module and/or the first information storage module are/is coupled to the first processor.

In this solution, the first information storage module is configured to store various information, and the first processor may invoke information stored in the first information storage module or write information into the first information storage module according to an actual requirement. The first power module is configured to provide electric energy for the tower sensing apparatus, so that the tower sensing apparatus can work independently.

In some possible implementations of the first aspect, the tower sensing apparatus further includes a first data transmission interface configured to send the tower status information to a tower data center, where the first data transmission interface is coupled to the first processor.

In this solution, the first data transmission interface is disposed, so that the background tower data center and the tower sensing apparatus can communicate with each other, and the tower data center can obtain data transmitted by the tower sensing apparatus, to perform information collection, analysis, management, and warning. In addition, the tower data center may specify a type, a format, and the like of data sent by the tower sensing apparatus.

In some possible implementations of the first aspect, the first data transmission interface sends the tower status information to the tower data center via a tower receiving terminal.

In some possible implementations of the first aspect, the first data transmission interface is a first wireless communication interface or a first wired communication interface.

For example, when the first data transmission interface is the first wireless communication interface, the first wireless communication interface includes at least one of the following: a ZigBee communication interface, a wireless fidelity interface, a Bluetooth communication interface, a mobile communication interface, a narrowband internet of things communication interface, and a long range radio communication interface.

For example, when the first data transmission interface is the first wired communication interface, the first wired communication interface includes at least one of the following: a recommended standard RS485 communication interface, a recommended standard RS232 communication interface, a controller area network communication interface, a universal serial bus communication interface, an ethernet communication interface, and an antenna interface standards group interface.

In some possible implementations of the first aspect, the antenna status information is information associated with the antenna, and includes but is not limited to posture information of the antenna and/or environmental parameter information of an environment in which the antenna is located. The posture information of the antenna includes at least one of the following: a longitude, a latitude, an altitude, a downtilt, a roll angle, an azimuth, and a height of the antenna. The environmental parameter information includes at least one of the following: barometric pressure, temperature, humidity, smoke, air pollutant, wind speed, wind direction, wind load, rainfall, biological intrusion, and vibration.

In some possible implementations of the first aspect, the second sensing module includes at least one of the following: a second positioning module, a second barometric pressure sensing module, a second gravitational acceleration sensing module, a second temperature sensing module, a second humidity sensing module, a second smoke sensing module, a second air quality sensing module, a second rainfall sensing module, a second wind speed sensing module, a second wind direction sensing module, a second infrared sensing module, and a second vibration sensing module.

In this solution, the second sensing module may obtain the antenna status information. The second positioning module is configured to obtain positioning data of the antenna, where the positioning data includes information about at least one of an altitude, a longitude, a latitude, an azimuth, and the like. The second barometric pressure sensing module is configured to obtain a second barometric pressure value corresponding to a mounting position of the second barometric pressure sensing module. The second gravitational acceleration sensing module is configured to obtain tilt status information corresponding to a mounting position of the second gravitational acceleration sensing module, where the tilt status information includes a downtilt and the like. The second temperature sensing module is configured to obtain an ambient temperature corresponding to a mounting position of the second temperature sensing module. The second humidity sensing module is configured to obtain ambient humidity corresponding to a mounting position of the second humidity sensing module. The second smoke sensing module is configured to detect presence of smoke of a fire in a mounting position of the second smoke sensing module. The second air quality sensing module is configured to detect an air pollutant concentration status at a mounting position of the second air quality sensing module. The second wind speed sensing module is configured to detect a wind speed corresponding to a mounting position of the second wind speed sensing module. The second wind direction sensing module is configured to detect a wind direction corresponding to a mounting position of the second wind direction sensing module. The second rainfall sensing module is configured to detect rainfall corresponding to a mounting position of the second rainfall sensing module. The second infrared sensing module is configured to detect presence of biological intrusion in a mounting position of the second infrared sensing module. The second vibration sensing module is configured to detect a vibration status corresponding to a mounting position of the second vibration sensing module.

In some possible implementations of the first aspect, the antenna sensing apparatus further includes a second information storage module and/or a second power module configured to provide electric energy for the antenna sensing apparatus, and the second power module and/or the second information storage module are/is coupled to the second processor.

In this solution, the second information storage module is configured to store various information, and the second processor may invoke information stored in the second information storage module or write information into the second information storage module according to an actual requirement. The second power module is configured to provide electric energy for the antenna sensing apparatus, so that the antenna sensing apparatus can work independently.

In some possible implementations of the first aspect, the antenna sensing apparatus further includes a second data transmission interface configured to send the antenna status information to a base station management center, where the second data transmission interface is coupled to the second processor.

In this solution, the second data transmission interface is disposed, so that the background base station management center and the antenna sensing apparatus can communicate with each other, and the base station management center can obtain data transmitted by the antenna sensing apparatus, to perform information collection, analysis, management, and warning. In addition, the base station management center may specify a type, a format, and the like of data sent by the antenna sensing apparatus.

In some possible implementations of the first aspect, the second data transmission interface is a second wireless communication interface or a second wired communication interface.

For example, when the second data transmission interface is the second wireless communication interface, the second wireless communication interface includes at least one of the following: a ZigBee communication interface, a wireless fidelity interface, a Bluetooth communication interface, a mobile communication interface, a narrowband internet of things communication interface, and a long range radio communication interface.

For example, when the second data transmission interface is the second wired communication interface, the second wired communication interface includes at least one of the following: a recommended standard RS485 communication interface, a recommended standard RS232 communication interface, a controller area network communication interface, a universal serial bus communication interface, an ethernet communication interface, and an antenna interface standards group interface.

In some possible implementations of the first aspect, the second data transmission interface sends the antenna status information to the base station management center via a remote radio unit and a baseband processing unit sequentially.

In some possible implementations of the first aspect, the second processor is coupled to a remote electrical tilt control system of the antenna to obtain an antenna parameter of the antenna, and the second processor sends the antenna parameter to the tower sensing apparatus by using the second communication module.

In this solution, the remote electrical tilt control system is a system used for controlling the antenna. The remote electrical tilt control system includes a third processor and a third information storage module, and the third information storage module stores the antenna parameter of the antenna. Therefore, the second processor may be coupled to the remote electrical tilt control system to obtain the antenna parameter, the second processor sends the antenna parameter to the tower sensing apparatus by using the second communication module, and the tower sensing apparatus may send the antenna parameter to the background tower data center according to a requirement.

In some possible implementations of the first aspect, the first communication module and the second communication module are wireless communication modules or wired communication modules.

In some possible implementations of the first aspect, when the first communication module and the second communication module are the wireless communication modules, the wireless communication module includes at least one of the following: a ZigBee communication module, a wireless fidelity module, a Bluetooth communication module, a mobile communication module, a narrowband internet of things communication module, and a long range radio communication module.

In some possible implementations of the first aspect, when the first communication module and the second communication module are the wired communication modules, the wired communication module includes at least one of the following: a recommended standard RS485 communication module, a recommended standard RS232 communication module, a controller area network communication module, a universal serial bus communication module, and an ethernet communication module.

According to a second aspect, this application further provides a tower sensing apparatus, where the tower sensing apparatus is disposed on a communication tower, and an antenna and an antenna sensing apparatus configured to obtain antenna status information of the antenna are further disposed on the communication tower.

The tower sensing apparatus includes a first processor, a first communication module, and a first sensing module configured to obtain tower status information of the communication tower, where the first communication module is configured to communicate with the antenna sensing apparatus, and the first communication module and the first sensing module are both coupled to the first processor.

According to a third aspect, this application further provides an antenna sensing apparatus, where the antenna sensing apparatus is disposed on an antenna of a communication tower, and a tower sensing apparatus configured to obtain tower status information of the communication tower is further disposed on the communication tower.

The antenna sensing apparatus includes a second processor, a second communication module, and a second sensing module configured to obtain antenna status information of the antenna. The second communication module is configured to communicate with the tower sensing apparatus, and the second communication module and the second sensing module are both coupled to the second processor.

According to a fourth aspect, this application further provides a communication method, applied to the tower sensing apparatus according to the second aspect. The method includes the following steps:

obtaining tower status information; and sending the tower status information to an antenna sensing apparatus.

After obtaining the tower status information, the tower sensing apparatus may send the tower status information to the antenna sensing apparatus by using a first communication module and a second communication module, so that the antenna sensing apparatus processes, analyzes, forwards, or performs another operation on the tower status information, to implement information sharing between the tower sensing apparatus and the antenna sensing apparatus. The antenna sensing apparatus may send the tower status information to a base station management center, and the base station management center may manage the tower status information.

In some possible embodiments of the fourth aspect, the tower status information includes a mounting height of a first barometric pressure sensing module in the tower sensing apparatus and a first barometric pressure value corresponding to the mounting height, so that the antenna sensing apparatus obtains an antenna height above the ground based on the mounting height and the first barometric pressure value.

This solution provides a method for measuring an antenna height, and calculation accuracy of the method is high.

According to a fifth aspect, this application further provides a communication method, applied to the antenna sensing apparatus according to the third aspect. The method includes the following steps:

receiving tower status information sent by a tower sensing apparatus; and sending the tower status information to a base station management center.

In this solution, after obtaining the tower status information, the tower sensing apparatus may send the tower status information to the antenna sensing apparatus, to implement information sharing between the tower sensing apparatus and the antenna sensing apparatus.

The antenna sensing apparatus may send the tower status information to the base station management center, and the base station management center may manage the tower status information.

In some possible embodiments of the fifth aspect, the tower status information includes a mounting height of a first barometric pressure sensing module in the tower sensing apparatus and a first barometric pressure value corresponding to the mounting height. Correspondingly, the communication method further includes:

obtaining antenna status information, where the antenna status information includes a temperature and a second barometric pressure value that correspond to a position of a second barometric pressure sensing module; and
obtaining an antenna height above the ground based on the mounting height, the first barometric pressure value, the temperature, and the second barometric pressure value.

According to a sixth aspect, this application further provides a communication method, applied to the antenna sensing apparatus according to the third aspect. The method includes the following steps:
obtaining antenna status information; and sending the antenna status information to a tower sensing apparatus.

In this solution, after obtaining the antenna status information, the antenna sensing apparatus may alternatively send the antenna status information to the tower sensing apparatus by using a first communication module and a second communication module, so that the tower sensing apparatus processes, analyzes, forwards, or performs another operation on the antenna status information, to implement information sharing between the tower sensing apparatus and the antenna sensing apparatus. The tower sensing apparatus may send the antenna status information to a tower data center, and the tower data center may manage the antenna status information.

In some possible embodiments of the sixth aspect, the method further includes:
obtaining an antenna parameter of an antenna; and sending the antenna parameter to the tower sensing apparatus, so that the tower sensing apparatus sends the antenna parameter to the tower data center, and the tower data center may manage the antenna parameter, so that a staff member can observe a change of the antenna parameter.

**BRIEF** DESCRIPTION OF DRAWINGS

The following describes accompanying drawings used in embodiments of this application.

FIG. 1a is a diagram of an architecture of a communication sensing system according to an embodiment of this application;

FIG. 1b is a diagram of a structure of a communication sensing system according to an embodiment of this application;
FIG. 1c is a diagram of a structure of another communication sensing system according to an embodiment of this application;
FIG. 1d is a diagram of a structure of another communication sensing system according to an embodiment of this application;
FIG. 2 is a diagram of a structure of a tower sensing apparatus according to an embodiment of this application;
FIG. 3 is a diagram of a structure of an antenna sensing apparatus according to an embodiment of this application;
FIG. 4 is a diagram of an architecture of another communication sensing system according to an embodiment of this application;
FIG. 5 is a diagram of calculating an antenna height according to an embodiment of this application;
FIG. 6 is a schematic flowchart of a communication method according to an embodiment of this application;
FIG. 7 is a schematic flowchart of another communication method according to an embodiment of this application; and
FIG. 8 is a schematic flowchart of another communication method according to an embodiment of this application.

DESCRIPTION OF EMBODIMENTS

The following describes technical solutions of this application with reference to the accompanying drawings.

Embodiments of this application relate to an application. Therefore, for ease of understanding, the following first describes related concepts such as related terms in embodiments of this application.

In embodiments of this application, the word "example" or "for example" is used to represent giving an example, an illustration, or a description. Any embodiment or design solution described by using "as an example" or "for example" in this application should not be explained as being more preferred or having more advantages than another embodiment or design solution. To be precise, the terms, such as "as an example" or "for example", are intended to present a related concept in a specific manner.

In embodiments of this application, "at least one" means one or more, and "multiple" means two or more. The term "at least one of the following items (pieces)" or an expression similar to the term indicates any combination of the items, and includes a single item (piece) or any combination of multiple items (pieces). For example, at least one item (piece) of a, b, and c may indicate: a, b, c, (a and b), (a and c), (b and c), or (a, b, and c), where a, b, and c may be singular or plural. "And/Or" describes an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects. Sequence numbers of steps (for example, step S1 and step S21) in embodiments of this application are merely used to distinguish between different steps, and do not limit an execution sequence of the steps.

In addition, unless otherwise stated, ordinal numbers such as "first" and "second" in embodiments of this application are for distinguishing between multiple objects, but are not intended to limit an order, a time sequence, priorities, or importance of the multiple objects. For example, a first device and a second device are merely for ease of description, and do not indicate a difference of the first device and the second device in terms of a structure and a degree of importance. In some embodiments, the first device and the second device may alternatively be the same device.

According to the context, the term "when" used in the foregoing embodiments may be interpreted as "if", "after", "in response to determining", or "in response to detecting". The foregoing descriptions are merely optional embodiments of this application, but are not intended to limit this application. Any modification, equivalent replacement, improvement, or the like made within the concept and principle of this application shall fall within the protection scope of this application.

In a conventional technology, a communication tower is manually inspected. Efficiency is low, labor costs are high, and a related status of a communication antenna on the tower cannot be sensed. Therefore, an embodiment of this application provides a communication sensing system. The system can effectively improve efficiency of managing the communication tower and the antenna.

The following describes the communication sensing system in detail.

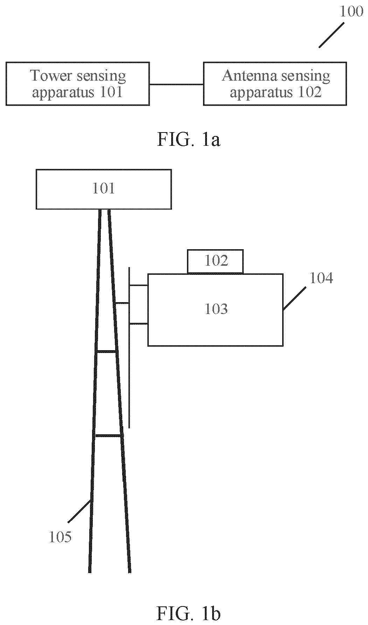

FIG. 1a is a diagram of an architecture of a communication sensing system according to an embodiment of this application. The communication sensing system 100 includes a tower sensing apparatus 101 and an antenna sensing apparatus 102.

The tower sensing apparatus 101 is disposed on a communication tower or outside a communication tower.

The outside of the communication tower refers to an area spanning a specific distance from the communication tower. A specific length of the distance and a shape of the area may be set according to an actual situation. In this case, the tower sensing apparatus 101 does not directly contact the communication tower. For example, the outside of the communication tower is a circular area with the center of the communication tower being the circle center and a radius being 0.5 m.

The tower sensing apparatus 101 is configured to obtain tower status information of the communication tower. For example, the tower status information is information associated with the communication tower, and includes but is not limited to posture information of the communication tower and/or environmental parameter information of an environment in which the communication tower is located. The posture information of the communication tower includes at least one of the following: a longitude, a latitude, an altitude, a downtilt, a roll angle, and an azimuth of the communication tower. The environmental parameter information includes at least one of the following: barometric pressure, temperature, humidity, smoke, air pollutant, wind speed, wind load, wind direction, rainfall, biological intrusion, and vibration.

Further, an antenna and an antenna sensing apparatus 102 configured to obtain antenna status information of the antenna are further disposed on the communication tower, and the antenna sensing apparatus 102 is disposed on the antenna.

For example, the antenna status information is information associated with the antenna, and includes but is not limited to posture information of the antenna and/or environmental parameter information of an environment in which the antenna is located. The posture information of the antenna includes at least one of the following: a longitude, a latitude, an altitude, a downtilt, a roll angle, an azimuth, and a height of the antenna. The environmental parameter information includes at least one of the following: barometric pressure, temperature, humidity, smoke, air pollutant, wind speed, wind direction, wind load, rainfall, biological intrusion, and vibration.

Specifically, at least one antenna is disposed on one communication tower, and at least one antenna sensing apparatus 102 is correspondingly disposed on each antenna. A specific structure form of the communication tower includes but is not limited to: a tower station, a view tower, and a mast tower. For example, the tower station may include an angle steel tower, a single-pole tower, a triple-pole tower, and a guyed tower. The angle steel tower is a communication tower made of angle steel. The single-pole tower is a communication tower including a single steel pole. A triple-pole tower is a self-supporting high-rise steel structure made of steel poles and with a trilateral cross section. The guyed tower cannot stand independently and needs to be supported by stay wires. Therefore, it is also referred to as a non-self-supporting tower. The view tower is a communication tower that retains the communication function and integrates with the ambient environment, such as a lamp pole tower or a bionic tree. The mast tower is mainly mounted on the roof of a building. Therefore, the mast tower is also referred to as a roof tower, which includes but is not limited to a pole tower, a support pole, and a heightening stand.

Refer to FIG. 1b. FIG. 1b is a diagram of a structure of a communication sensing system according to an embodiment of this application. When a tower sensing apparatus 101 is disposed on a communication tower, for example, the tower sensing apparatus 101 may be disposed in any position on the communication tower 105. In FIG. 1b, a structure of the communication tower 105 is an angle steel tower. In addition, a mounting height of the tower sensing apparatus 101 may be further preset in the tower sensing apparatus 101. Generally, the mounting height has high precision. Therefore, the mounting height may be used as a reference value for calculating an antenna height. Further, for example, the tower sensing apparatus 101 is disposed on the tower top of the communication tower 105. Because the tower top is not blocked by another object, environmental conditions for signal sending and receiving of the tower sensing apparatus are best, so that signal interference can be effectively avoided, and precision of the tower status information obtained by the tower sensing apparatus is ensured, that is, sensing precision of the tower sensing apparatus 101 is improved.

Refer to FIG. 1b. For example, an antenna 103 is disposed in a radome 104, and the radome 104 includes a peripheral housing, a bottom cover (not shown in FIG. 1b), and a top cover (not shown in FIG. 1b). In an example, an antenna sensing apparatus 102 is disposed on the top cover of the radome 104.

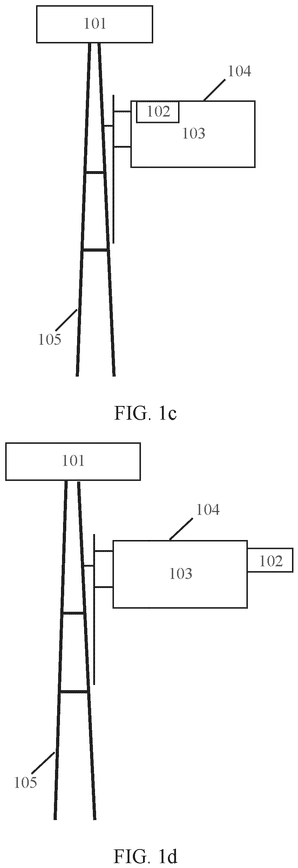

Refer to FIG. 1c. FIG. 1c is a diagram of a structure of another communication sensing system according to an embodiment of this application. For example, an antenna sensing apparatus 102 is disposed inside a housing of a radome 104. A specific mounting position of the antenna sensing apparatus 102 inside the housing is not specifically limited, provided that the antenna sensing apparatus 102 can function normally.

Refer to FIG. 1d. FIG. 1d is a diagram of a structure of another communication sensing system according to an embodiment of this application. For example, an antenna sensing apparatus 102 is disposed on an outer side of a housing of a radome 104, that is, the antenna sensing apparatus 102 is disposed on and fastened to the outer side of the housing. A specific mounting position of the antenna sensing apparatus 102 on the outer side of the housing is not specifically limited, provided that the antenna sensing apparatus 102 can function normally.

In this embodiment of this application, the antenna sensing apparatus is disposed in the housing of the radome of the antenna, on the outer side of the housing, or on the top cover of the radome, effectively reducing signal interference and shielding, and ensuring normal signal sending and receiving of a first communication module in the antenna sensing apparatus. Further, the antenna sensing apparatus may alternatively be disposed at another position such as the outer side of the bottom cover, provided that normal signal sending and receiving of the first communication module in the antenna sensing apparatus can be ensured.

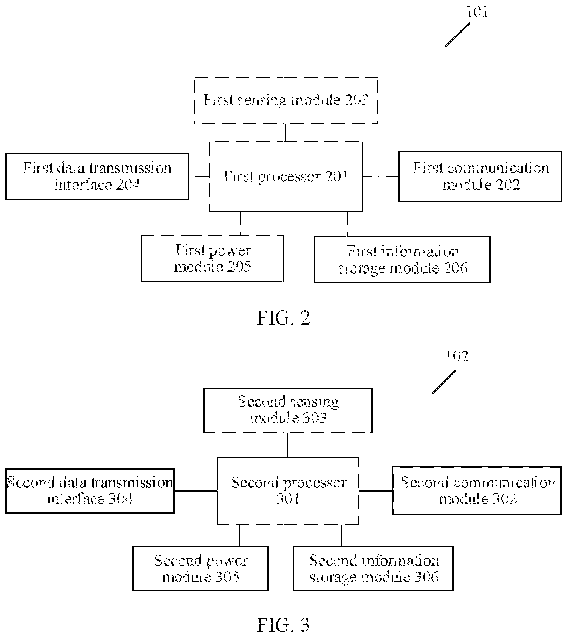

FIG. 2 is a diagram of a structure of a tower sensing apparatus according to an embodiment of this application. The tower sensing apparatus 101 includes a first processor 201, a first communication module 202, and a first sensing module 203 configured to obtain tower status information of a communication tower, where the first communication module 202 is configured to communicate with an antenna sensing apparatus 102, and the first communication module 202 and the first sensing module 203 are both coupled to the first processor 201. The first processor 201 serves as a data processing center and a control center of the tower sensing apparatus 101, and the first communication module 202 is configured to communicate with the antenna sensing apparatus. For example, the first processor 201 is coupled to the first sensing module 203 to obtain sensing data of the first sensing module 203, and the first processor 201 obtains the tower status information based on the sensing data. The first processor 201 may use the sensing data, for example, a temperature, humidity, or a wind speed, as the tower status information. Alternatively, the first processor 201 processes and calculates the sensing data of the first sensing module 203, to obtain the tower status information. For example, when the sensing data is a wind speed, the first processor 201 obtains a wind load of the communication tower through calculation based on the wind speed.

Refer to FIG. 2. The tower sensing apparatus 101 further includes a first data transmission interface 204 configured to send the tower status information to a tower data center, where the first data transmission interface 204 is coupled to the first processor 201.

In the solution of this embodiment, the first data transmission interface is disposed, so that the background tower data center and the tower sensing apparatus can communicate with each other, and the tower data center can obtain data transmitted by the tower sensing apparatus, to perform information collection, analysis, management, and warning. For example, the tower data center may perform comprehensive and high-precision monitoring and timely and effective warning on the tower status information and antenna status information of an antenna on the tower, and enable high-precision application integrating communication and sensing in the future, improving a capability of visualized management of resources on the tower and space quantification, and improving tower operation efficiency. In addition, the tower data center may specify a type, a format, and the like of data sent by the tower sensing apparatus.

For example, the first data transmission interface 204 may be a first wireless communication interface or a first wired communication interface. The first wireless communication interface includes at least one of the following: a ZigBee ZigBee communication interface, a wireless fidelity (Wireless Fidelity, Wi-Fi) interface, a Bluetooth communication interface, a mobile communication interface, a narrowband internet of things (Narrow Band Internet of Things, NB-IoT) communication interface, and a long range radio (Long Range Radio, LoRa) communication interface. The mobile communication interface may be any mobile communication interface such as a 2G mobile communication interface, a 3G mobile communication interface, a 4G mobile communication interface, or a 5G mobile communication interface. The first wired communication interface includes at least one of the following: a recommended standard (Recommended Standard, RS) 485 communication interface, a recommended standard RS232 communication interface, a controller area network (Controller Area Network, CAN) communication interface, a universal serial bus (Universal Serial Bus, USB) communication interface, an ethernet communication interface, and an antenna interface standards group (Antenna Interface Standards Group, AISG) interface.

Refer to FIG. 2. The tower sensing apparatus 101 further includes a first information storage module 206 and/or a first power module 205 configured to provide electric energy for the tower sensing apparatus. The first power module 205 and/or the first information storage module 206 are/is coupled to the first processor 201.

In the solution of this embodiment, the first information storage module is configured to store various information, and the first processor may invoke information stored in the first information storage module, for example, a mounting height of the tower sensing apparatus (or a mounting height of the first sensing module, or a mounting height of a first barometric pressure sensing module), or write information into the first information storage module according to an actual requirement. The first power module is configured to provide electric energy for the tower sensing apparatus, so that the tower sensing apparatus can work independently.

FIG. 3 is a diagram of a structure of an antenna sensing apparatus according to an embodiment of this application. The antenna sensing apparatus 102 includes a second processor 301, a second communication module 302, and a second sensing module 303 configured to obtain antenna status information of an antenna, where the second communication module 302 is configured to communicate with a tower sensing apparatus 101, and the second communication module 302 and the second sensing module 303 are both coupled to the second processor 301. The second processor 301 serves as a data processing center and a control center of the antenna sensing apparatus 102. The second communication module 302 is configured to communicate with the tower sensing apparatus. Specifically, a first communication module 202 communicates with the second communication module 302. For example, the second processor 301 is coupled to the second sensing module 303 to obtain sensing data of the second sensing module 303, and the second processor 301 may use the sensing data, for example, a temperature, humidity, or a wind speed, as the antenna status information. Alternatively, the second processor 301 processes the sensing data of the second sensing module 303, to obtain the antenna status information. For example, when the sensing data is a wind speed, the second processor 301 obtains a wind load of the antenna through calculation based on the wind speed.

Refer to FIG. 3. The antenna sensing apparatus 102 further includes a second information storage module 306 and/or a second power module 305 configured to provide electric energy for the antenna sensing apparatus 102. The second power module 305 and/or the second information storage module 306 are/is coupled to the second processor 301.

In the solution of this embodiment, the second information storage module is configured to store various information, and the second processor may invoke information stored in the second information storage module or write information into the second information storage module according to an actual requirement. The second power module is configured to provide electric energy for the antenna sensing apparatus, so that the antenna sensing apparatus can work independently.

Refer to FIG. 3. The antenna sensing apparatus 102 further includes a second data transmission interface 304 configured to send the antenna status information to a base station management center, where the second data transmission interface is coupled to the second processor 301.

In the solution of this embodiment, the second data transmission interface is disposed, so that the background base station management center and the antenna sensing apparatus can communicate with each other, and the base station management center can obtain data transmitted by the antenna sensing apparatus, to perform information collection, analysis, management, and warning. In addition, the base station management center may specify a type, a format, and the like of data sent by the antenna sensing apparatus. When obtaining tower status information sent by the tower sensing apparatus, the antenna sensing apparatus 102 may alternatively send the tower status information to the base station management center according to a requirement, so that the base station management center can manage the tower and the antenna at the same time, improving management efficiency.

For example, the second data transmission interface 304 may be a second wireless communication interface or a second wired communication interface. The second wireless communication interface includes at least one of the following: a ZigBee communication interface, a Wi-Fi interface, a Bluetooth communication interface, a mobile communication interface, an NB-IoT communication interface, and a LoRa communication interface. The mobile communication interface may be any mobile communication interface such as a 2G mobile communication interface, a 3G mobile communication interface, a 4G mobile communication interface, or a 5G mobile communication interface. The second wired communication interface includes at least one of the following: an RS485 communication interface, an RS232 communication interface, a CAN communication interface, a USB communication interface, an ethernet communication interface, and an AISG interface.

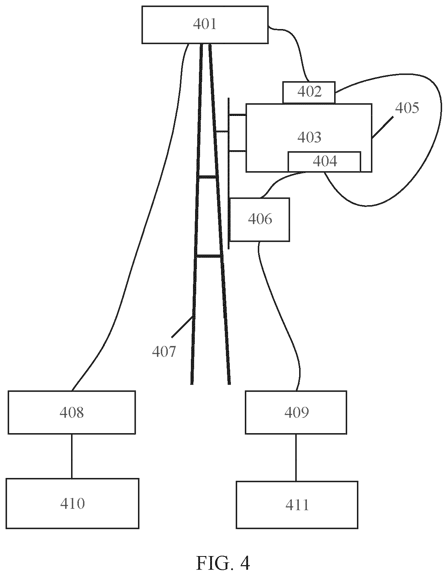

Refer to FIG. 4. FIG. 4 is a diagram of an architecture of another communication sensing system according to an embodiment of this application. For example, a second data transmission interface in an antenna sensing apparatus 402 sends antenna status information to a base station management center 411 via a remote radio unit (Remote Radio Unit, RRU) 406 and a baseband processing unit (Building Base band Unit, BBU) 409 sequentially, to implement remote transmission of the antenna status information. For example, the RRU is mainly configured to: convert a digital baseband signal into a radio frequency signal, and send the radio frequency signal to an antenna for radiation; or receive a radio frequency signal, and convert the radio frequency signal into a digital baseband signal. The BBU is mainly configured to perform data processing such as signal demodulation, and control an antenna beam of the RRU. For example, a transmission manner between the BBU and the RRU is wired transmission, for example, optical fiber transmission, and the RRU is connected to the antenna by using a coaxial cable or the like.

In this embodiment of this application, a tower sensing apparatus may be used to obtain tower status information, and an antenna sensing apparatus may be used to obtain antenna status information. Compared with manual inspection, this solution effectively improves efficiency of managing a communication tower and an antenna and reduces management costs. In addition, a first communication module and a second communication module may communicate with each other, that is, information can be shared between a tower sensing apparatus and an antenna sensing apparatus. Status information obtained by the two apparatuses may be managed in a unified manner, implementing integrated intelligent sensing, and helping improve efficiency of managing the communication tower and the antenna.

Refer to FIG. 4. For example, a second processor in the antenna sensing apparatus 402 is further coupled to a remote electrical tilt control system 404 of an antenna to obtain an antenna parameter of the antenna. The antenna parameter includes at least one of the following: a reference wind load of the antenna, an impedance of the antenna, a serial number of the antenna, a weight of the antenna, an operating frequency band of the antenna, and an antenna morphological parameter. The reference wind load of the antenna is measured at a preset wind speed. The antenna morphological parameter includes at least one of the following: an antenna height, an antenna width, and an antenna thickness.

In the solution of this embodiment, the remote electrical tilt control system is a system used for controlling the antenna. The remote electrical tilt control system includes a third processor and a third information storage module, and the third information storage module stores the antenna parameter of the antenna. Therefore, the second processor may be coupled to the remote electrical tilt control system to obtain the antenna parameter, and then the antenna parameter is sent to a background tower data center 410 by using the second communication module.

Refer to FIG. 4. For example, the second processor in the antenna sensing apparatus 402 is coupled to the remote electrical tilt control system 404 by using an AISG cable, so that the second processor obtains the antenna parameter. Further, the RRU 406 has only one data interface, and the data interface is connected to the remote electrical tilt control system 404. The RRU 406 and the antenna sensing apparatus 402 can communicate with each other based on data transparent transmission of the remote electrical tilt control system 404, so that the antenna status information is sent to the base station management center 411. For example, the remote electrical tilt control system 404 is disposed inside a housing 405 of an antenna 403.

Refer to FIG. 4. For example, a tower sensing apparatus 401 on a communication tower 407 communicates with the tower data center 410 via a tower receiving terminal 408. The tower sensing apparatus 401 may send at least one piece of the following information to the tower data center 410: the tower status information, the antenna status information, and the antenna parameter, so that the tower data center can manage the tower and the antenna at the same time, improving management efficiency.

In the solution of this embodiment, a first sensing module may obtain the tower status information. For example, the first sensing module includes at least one of the following: a first positioning module, a first barometric pressure sensing module, a first gravitational acceleration sensing module, a first temperature sensing module, a first humidity sensing module, a first smoke sensing module, a first air quality sensing module, a first wind speed sensing module, a first wind direction sensing module, a first rainfall sensing module, a first infrared sensing module, and a first vibration sensing module.

The first positioning module is configured to obtain posture information of the communication tower, where the posture information includes information about at least one of an altitude, a longitude, a latitude, an azimuth (for example, a northbound azimuth), and the like.

The first positioning module may obtain positioning data based on different positioning systems. The positioning systems include but are not limited to a Global Positioning System (Global Positioning System, GPS), a BeiDou Navigation Satellite System, a Galileo Navigation Satellite System, and a Glonass Navigation Satellite System. For example, the global positioning system is a high-precision radio navigation positioning system based on man-made earth satellites. The global positioning system can provide accurate geographical location, vehicle speed, and accurate time information in any place around the world and in near-earth space. The BeiDou Navigation Satellite System includes the space segment, ground segment, and user segment, providing high-accuracy, reliable, and round-the-clock positioning, navigation and timing services to global users in all weathers, supporting short message communication, and preliminarily supporting regional navigation, positioning, and timing. The positioning accuracy is at the decimeter-level and centimeter-level, the velocity measurement accuracy is 0.2 meters per second, and the timing is accurate to 10 nanoseconds. The Galileo Navigation Satellite System is a global satellite navigation and positioning system developed and established by the European Union. The Glonass Navigation Satellite System can provide high-accuracy three-dimensional location, three-dimensional velocity, and time information for military and civilian users in the global sea, land, and space around the clock.

For example, the first positioning module is a GPS module. The GPS module may be a single-antenna GPS module or a dual-antenna GPS module, which is also referred to as a dual-GPS differential module. For example, the dual-GPS differential module includes a satellite card, a low noise amplifier device, a surface acoustic wave (Surface Acoustic Wave, SAW) filter, and two circularly polarized antennas. The two antennas are placed on two sides of the tower sensing apparatus, and are configured to receive GPS signals. A first processor of the tower sensing apparatus performs algorithm and filtering processing on the received GPS navigation positioning signal to obtain corresponding positioning data such as an altitude, a longitude, a latitude, and a northbound azimuth.

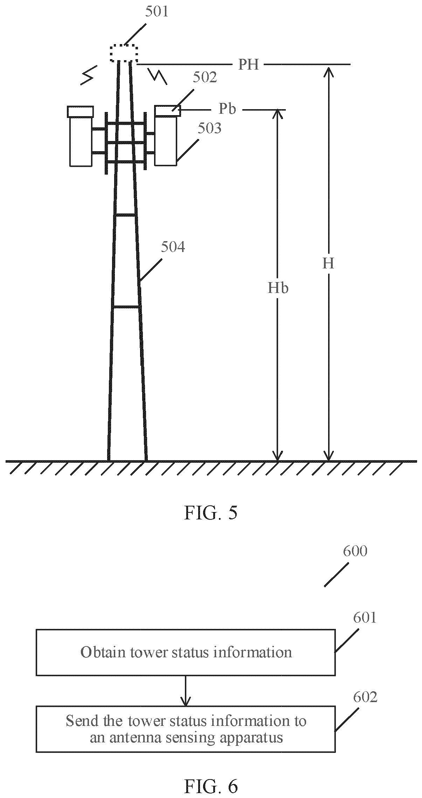

The first barometric pressure sensing module is configured to obtain a first barometric pressure value corresponding to a mounting position of the first barometric pressure sensing module, and an accurate antenna height above the ground may be calculated based on the first barometric pressure value. For a specific calculation process, refer to related descriptions of FIG. 5.

For example, the first barometric pressure sensing module includes a barometric pressure sensor, and the first barometric pressure value in the position of the barometric pressure sensor may be obtained based on the barometric pressure sensor. For another example, to improve accuracy of the first barometric pressure value, the barometric pressure sensor may be implemented by using a barometric pressure sensor with temperature compensation. For another example, because the barometric pressure is affected by environmental noise such as temperature and air flow, the first processor may remove the impact of the environmental noise by using algorithm processing, to obtain a relatively accurate first barometric pressure value. For example, M (M is greater than 1) barometric pressure values are collected at a specific time interval, filtering algorithm processing is performed based on the M barometric pressure values to obtain N (N is less than M) barometric pressure values, and then the first barometric pressure value is determined based on the N barometric pressure values. For example, an average value of X barometric pressure values whose values are most densely distributed in the N barometric pressure values is used as the first barometric pressure value, or an average value of the N barometric pressure values is directly calculated, and the average value is used as the first barometric pressure value.

The first gravitational acceleration sensing module is configured to obtain tilt status information corresponding to a mounting position of the first gravitational acceleration sensing module, where the tilt status information includes a mechanical tilt (for example, a downtilt) and/or a roll angle. For example, the first gravitational acceleration sensing module includes a gravitational acceleration sensor.

The first temperature sensing module is configured to obtain an ambient temperature corresponding to a mounting position of the first temperature sensing module. For example, the first temperature sensing module includes a temperature sensor. The first humidity sensing module is configured to obtain ambient humidity corresponding to a mounting position of the first humidity sensing module. For example, the first humidity sensing module includes a humidity sensor.

The first smoke sensing module is configured to detect presence of smoke of a fire in a mounting position of the first smoke sensing module. For example, the first smoke sensing module includes a smoke sensor, and the smoke sensor uses a photoelectric smoke sensing device. Photoelectric smoke sensing is developed based on a characteristic that smoke generated during fire can change propagation of light.

The first air quality sensing module is configured to detect an air pollutant concentration status in a mounting position of the first air quality sensing module. For example, the first air quality sensing module may detect at least one of the following concentrations: light in the air, particulate matter (Particulate Matter, PM) 2.5, PM10, total volatile organic compounds (Total Volatile Organic Compounds, TVOC), oxygen ($O_2$), carbon dioxide ($CO_2$), carbon monoxide (CO), formaldehyde ($CH_2O$), and the like. PM2.5 usually refers to fine particulate matters. Fine particulate matters are also referred to fine grains, fine particles, and PM2.5. Fine particulate matters refer to particles with an aerodynamic equivalent diameter less than or equal to 2.5 microns in ambient air. PM10 refers to inhalable particles, usually particles with a diameter less than 10 microns.

Further, the first air quality sensing module includes an air quality sensor, and the air quality sensor is also referred to as an air environment integrated monitor. Specifically, the air quality sensor includes at least one of the following: a light sensor, a PM2.5 sensor, a PM10 sensor, a TVOC sensor, an oxygen sensor, a carbon dioxide sensor, a carbon monoxide sensor, and a formaldehyde sensor.

The first wind speed sensing module is configured to detect a wind speed corresponding to a mounting position of the first wind speed sensing module. For example, the first wind speed sensing module includes a wind speed sensor. The first wind direction sensing module is configured to detect a wind direction corresponding to a mounting position of the first wind direction sensing module. For example, the first wind direction sensing module includes a wind direction sensor. The first rainfall sensing module is configured to detect rainfall corresponding to a mounting position of the first rainfall sensing module. For example, the first rainfall sensing module includes a rainfall sensor. The first infrared sensing module is configured to detect presence of biological intrusion in a mounting position of the first infrared sensing module. For example, the first infrared sensing module includes an infrared sensor. The first vibration sensing module is configured to detect a vibration status corresponding to a mounting position of the first vibration sensing module. For example, the first vibration sensing module includes a vibration sensor.

In this solution, a second sensing module may obtain the antenna status information. For example, the second sensing module includes at least one of the following: a second positioning module, a second barometric pressure sensing module, a second gravitational acceleration sensing module, a second temperature sensing module, a second humidity sensing module, a second smoke sensing module, a second air quality sensing module, a second rainfall sensing module, a second wind speed sensing module, a second wind direction sensing module, a second infrared sensing module, and a second vibration sensing module.

Similar to the first positioning module, the second positioning module may obtain positioning data based on different positioning systems. Refer to related descriptions of the first positioning module. Details are not described herein again.

The second barometric pressure sensing module is configured to obtain a second barometric pressure value corresponding to a mounting position of the second barometric pressure sensing module, and an accurate antenna height above the ground may be calculated based on the first barometric pressure value and the second barometric pressure value. For a specific calculation process, refer to related descriptions of FIG. 5.

For specific descriptions of the second gravitational acceleration sensing module, the second temperature sensing module, the second humidity sensing module, the second smoke sensing module, the second air quality sensing module, the second wind speed sensing module, the second wind direction sensing module, the second rainfall sensing module, the second infrared sensing module, the second vibration sensing module, and the like in the second sensing module, refer to related descriptions of the same sensing modules in the first sensing module. Details are not described herein again.

For example, the first communication module and the second communication module are wireless communication modules or wired communication modules, that is, wireless communication or wired communication is performed between the first communication module and the second communication module. The wireless communication module includes at least one of the following: a ZigBee communication module, a Wi-Fi module, a Bluetooth communication module, a mobile communication module, an NB-IoT communication module, and a LoRa communication module. The wired communication module includes at least one of the following: an RS485 communication module, an RS232 communication module, a CAN communication module, a USB communication module, and an ethernet communication module.

For example, the tower data center or the base station management center may determine a quantity of antennas on the communication tower based on a quantity of antenna serial numbers and/or a quantity of communication identifiers (identification, ID) of antenna sensing apparatuses. Further, for example, when at least one antenna sensing apparatus and at least one tower sensing apparatus are disposed on a communication tower, the at least one antenna sensing apparatus sends an antenna parameter (including an antenna serial number and the like) to the at least one tower sensing apparatus (one antenna sensing apparatus may correspond to one tower sensing apparatus for information transmission, or multiple antenna sensing apparatuses correspond to one tower sensing apparatus for information transmission, or one antenna sensing apparatus corresponds to multiple tower sensing apparatuses for information transmission). Then, the tower sensing apparatus sends the collected antenna parameter to the tower data center. In this way, the tower data center determines, based on a correspondence between the tower sensing apparatus and the communication tower and a quantity of antenna serial numbers in the antenna parameter, a quantity of antennas on each communication tower. In addition, when the antenna sensing apparatus communicates with the tower sensing apparatus to transmit an antenna parameter, the tower sensing apparatus may record a correspondence between a communication ID of the antenna sensing apparatus and an antenna parameter, and then the tower sensing apparatus transmits the correspondence to the tower data center. In this way, the tower data center determines, based on the correspondence between the tower sensing apparatus and the communication tower and a quantity of communication IDs of the antenna sensing apparatus, a quantity of antennas on the communication tower. Certainly, the tower data center may also mutually verify the quantity of antennas on the communication tower based on the correspondence between the tower sensing apparatus and the communication tower, the quantity of communication IDs of the antenna sensing apparatus, and the quantity of antenna serial numbers. A method for determining the quantity of antennas on the communication tower by the base station management center is similar to the method for determining the quantity of antennas by the tower data center. Details are not described again.

The first barometric pressure sensing module may be mounted on the tower sensing apparatus or in any position on the communication tower, provided that a height of the mounting position of the first barometric pressure sensing module can be measured. Correspondingly, when the first barometric pressure sensing module is mounted on the tower sensing apparatus, the first barometric pressure value is a barometric pressure value in the position of the tower sensing apparatus. When the first barometric pressure sensing module is mounted in any position on the communication tower, that is, the first barometric pressure sensing module is not disposed on the tower sensing apparatus, but is disposed in any position on the communication tower, and is coupled to the first processor, the first barometric pressure value is a barometric pressure value corresponding to the mounting position of the first barometric pressure sensing module on the communication tower. In actual application, a mounting height corresponding to the mounting position of the first barometric pressure sensing module may be first obtained, and the mounting height is stored in a first information storage module.

Similarly, the second barometric pressure sensing module is disposed to obtain the second barometric pressure value corresponding to the mounting position of the second barometric pressure sensing module. The second barometric pressure sensing module may be mounted on the antenna sensing apparatus or in any position on the antenna. When the second barometric pressure sensing module is mounted on the antenna sensing apparatus, the second barometric pressure value is a barometric pressure value in the position of the antenna sensing apparatus. When the second barometric pressure sensing module is mounted in any position on the antenna, that is, the second barometric pressure sensing module is not disposed on the antenna sensing apparatus, but is disposed in any position on the antenna, and is coupled to the second processor, the second barometric pressure value is a barometric pressure value corresponding to the mounting position of the second barometric pressure sensing module on the antenna.

In this embodiment of this application, the antenna height above the ground is calculated based on the mounting height, the first barometric pressure value, the second barometric pressure value, and the distribution rule of Boltzmann gas molecules in the gravitational field. Specific descriptions are as follows.

FIG. 5 is a diagram of calculating an antenna height according to an embodiment of this application. In an example in which a first barometric pressure sensing module is disposed on a tower sensing apparatus 501, a second barometric pressure sensing module is disposed on an antenna sensing apparatus 502, the tower sensing apparatus 501 is disposed on a tower top of a communication tower 504, and the antenna sensing apparatus 502 is disposed on a top cover of a radome 503, height calculation is specifically described.

The tower sensing apparatus 501 obtains a mounting height H and a first barometric pressure value $P_H$. Because a height from the tower top of the communication tower 504 to the ground is known (which is obtained through measurement or by using another method), that is, the mounting height H of the tower sensing apparatus 501 is known, the mounting height H may be preset in the tower sensing apparatus 501. Then, the tower sensing apparatus 501 determines, by using the first barometric pressure sensing module, the first barometric pressure value $P_H$ corresponding to the mounting height H.

The antenna sensing apparatus 502 may measure, by using the second barometric pressure sensing module, a corresponding second barometric pressure value $P_b$ at an antenna height $H_b$. In addition, the antenna sensing apparatus may measure, by using a second temperature sensing module, a temperature value $T_b$ corresponding to the antenna height $H_b$. A second processor may accurately calculate the antenna height $H_b$ above the ground based on the received mounting height H, the first barometric pressure value $P_H$, the second barometric pressure value $P_b$, and the temperature value $T_b$ according to a calculation formula for height distribution of Boltzmann gas molecules in the gravitational field.

The barometric pressure and height are calculated as follows:

$$H_b = H - \frac{T_b}{\beta}\left[\left(\frac{P_H}{P_b}\right)^{-\beta R/g} - 1\right] \qquad (1)$$

$P_H$ is the first barometric pressure value (unit: Pascal, Pascal, Pa for short; symbol: Pa) corresponding to the mounting height H; $P_b$ is the second barometric pressure value (Pa) at the antenna height $H_b$; $\beta$ is a vertical temperature change rate (unit: Kelvins per meter; symbol: K/m), for example, $\beta = -6.5 \times 10^{-3}$ K/m; $T_b$ is the thermodynamic temperature at the antenna height $H_b$ (unit: Kelvins; symbol: K), where the formula for converting a thermodynamic temperature to a degree Celsius is as follows: K = °C + 273.15; g is the gravitational acceleration (m/second squared, m/s²), for example, g = 9.8 m/s²; and R is the air-specific gas constant (meter squared/Kelvins second squared, m²/Ks²), where R = 287.05287 m²/Ks².

In addition, for example, the antenna sensing apparatus may alternatively transmit the second barometric pressure value $P_b$ and the temperature value $T_b$ to the tower sensing apparatus, and a first processor accurately calculates the antenna height $H_b$ above the ground based on the mounting height H, the first barometric pressure value $P_H$, the second barometric pressure value $P_b$, and the temperature value $T_b$ according to a calculation formula for height distribution of Boltzmann gas molecules in the gravitational field.

For example, the antenna sensing apparatus may measure a current wind speed by using a second wind speed sensing module, determine a current wind load of the antenna based on the current wind speed, and use the wind load as antenna status information. Because an antenna parameter includes a reference wind load of the antenna, the antenna sensing apparatus may transmit the current wind load and the reference wind load to the tower sensing apparatus, and then the current wind load and the reference wind load are sent to a tower data center for processing, analysis, and monitoring.

A first method for calculating the wind load is as follows: The current wind load can be calculated based on a current wind pressure, an antenna parameter (such as an antenna morphological parameter), and a windward area.

The wind pressure is a pressure of the wind on a plane perpendicular to the airflow direction. According to a wind-pressure relationship obtained by the Bernoulli equation, the wind pressure may be expressed as:

$$w_p = 0.5 \cdot r_o \cdot v^2 \qquad (2)$$

$w_p$ is the wind pressure (kilonewton/square meter, $kN/m^2$), $r_o$ is the air density (kilogram/cubic meter, $kg/m^3$), and v is the wind speed (meter/second, m/s).

Because the relationship between the air density ($r_o$) and the weight (r) is $r = r_o \cdot g$, $r_o = r/g$. Using this relationship in (1), the following is obtained:

$$wp = 0.5 \cdot r \cdot v^2/g \qquad (3)$$

This formula is the standard wind pressure formula. In the standard state (the barometric pressure is 1013 hPa and the temperature is 15 °C), the air weight r is 0.01225 ($kN/m^3$). The gravitational acceleration g at the latitude 45° is 9.8 ($m/s^2$), and the following can be obtained:

$$w_p = v^2/1600 \qquad (4)$$

A second method for calculating the wind load is as follows: Because the preset wind speed corresponding to the reference wind load is known, after the second wind speed sensing module measures the current wind speed, the current wind load may be calculated based on the reference wind load and a ratio of the square of the current wind speed to the square of the preset wind speed.

FIG. 6 is a schematic flowchart of a communication method according to an embodiment of this application. This application further provides a communication method, applied to the tower sensing apparatus in any one of the foregoing embodiments. The communication method 600 includes the following steps.

601: Obtain tower status information.

602: Send the tower status information to an antenna sensing apparatus.

Specifically, after obtaining the tower status information, the tower sensing apparatus may send the tower status information to the antenna sensing apparatus by using a first communication module and a second communication module, so that the antenna sensing apparatus processes, analyzes, forwards, or performs another operation on the tower status information, to implement information sharing between the tower sensing apparatus and the antenna sensing apparatus. The antenna sensing apparatus may send the tower status information to a base station management center, and the base station management center may manage the tower status information.

For example, the tower status information includes a mounting height of a first barometric pressure sensing module in the tower sensing apparatus and a first barometric pressure value corresponding to the mounting height, so that the antenna sensing apparatus obtains an antenna height above the ground based on the mounting height and the first barometric pressure value. For a specific method for height calculation, refer to related descriptions of FIG. 5. A solution of this application provides a method for measuring an antenna height. Calculation accuracy of the method is high.

For specific descriptions and beneficial effects of the communication method 600, refer to descriptions in the foregoing embodiments. Details are not described herein again.

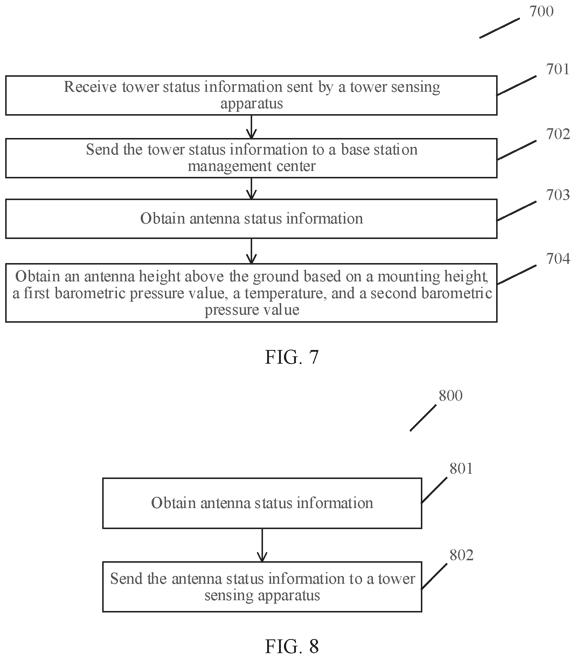

FIG. 7 is a schematic flowchart of another communication method according to an embodiment of this application. This application further provides a communication method, applied to the antenna sensing apparatus in any one of the foregoing embodiments. The communication method 700 includes the following steps.

701: Receive tower status information sent by a tower sensing apparatus.

702: Send the tower status information to a base station management center.

In this solution, after obtaining the tower status information, the tower sensing apparatus may send the tower status information to the antenna sensing apparatus, to implement information sharing between the tower sensing apparatus and the antenna sensing apparatus. The antenna sensing apparatus may send the tower status information to the base station management center, and the base station management center may manage the tower status information.

For example, the tower status information includes a mounting height of a first barometric pressure sensing module in the tower sensing apparatus and a first barometric pressure value corresponding to the mounting height. Correspondingly, the communication method 700 further includes the following steps.

703: Obtain antenna status information, where the antenna status information includes a temperature and a second barometric pressure value that correspond to a position of a second barometric pressure sensing module.

704: Obtain an antenna height above the ground based on the mounting height, the first barometric pressure value, the temperature, and the second barometric pressure value.

For specific descriptions and beneficial effects of the communication method 700, refer to descriptions in the foregoing embodiments. Details are not described herein again.

FIG. 8 is a schematic flowchart of another communication method according to an embodiment of this application. This application further provides a communication method, applied to the antenna sensing apparatus in any one of the foregoing embodiments. The communication method 800 includes the following steps.

801: Obtain antenna status information.

802: Send the antenna status information to a tower sensing apparatus.

In the solution of this embodiment, after obtaining the antenna status information, the antenna sensing apparatus may alternatively send the antenna status information to the tower sensing apparatus by using a first communication module and a second communication module, so that the tower sensing apparatus processes, analyzes, forwards, or performs another operation on the antenna status information, to implement information sharing between the tower sensing apparatus and the antenna sensing apparatus. The tower sensing apparatus may send the antenna status information to a tower data center, and the tower data center may manage the antenna status information.

For example, the communication method 800 further includes:

obtaining an antenna parameter of an antenna; and sending the antenna parameter to the tower sensing apparatus, so that the tower sensing apparatus sends the antenna parameter to the tower data center, and the tower data center may manage the antenna parameter.

For specific descriptions and beneficial effects of the communication method 800, refer to descriptions in the foregoing embodiments. Details are not described herein again.

When functions in the method according to any embodiment of this application are implemented in the form of a software functional unit and sold or used as an independent product, the functions may be stored in a computer-readable storage medium. Based on such an understanding, the communication methods in this application essentially, or the part contributing to the conventional technology, or a part of the technical solutions may be implemented in a form of a computer program product. The computer program product is stored in a storage medium and includes several instructions for instructing an electronic device to perform all or a part of the steps of the methods in embodiments of this application. The foregoing storage medium includes various media that can store program code, such as a USB flash drive, a removable hard disk, a read-only memory (Read-Only Memory, ROM), a random access memory (Random Access Memory, RAM), a magnetic disk, or an optical disc.

An embodiment of this application further provides a chip. The chip is used in an electronic device. The chip includes one or more processors. The processor is configured to invoke computer instructions, to cause the electronic device to perform the communication method according to any one of the foregoing embodiments.

An embodiment of this application further provides a computer program product including instructions. When the computer program product is run on an electronic device, the electronic device is caused to perform the communication method according to any one of the foregoing embodiments.

It may be understood that the computer storage medium, the chip, and the computer program product that are provided above are all configured to perform the communication method according to any one of the foregoing embodiments. Therefore, for beneficial effects that can be achieved, refer to beneficial effects in the communication method according to any one of the foregoing embodiments. Details are not described herein again.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, multiple units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, in other words, may be located in one position, or may be distributed on multiple network units. Some or all of the units may be selected based on actual requirements to achieve the objectives of the solutions of embodiments.

In addition, functional units in embodiments of this patent application may be integrated into one processing unit, each of the units may exist alone physically, or two or more units are integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication sensing system, comprising an antenna, a tower sensing apparatus, and an antenna sensing apparatus, wherein the antenna, the tower sensing apparatus, and the antenna sensing apparatus are disposed on a communication tower, wherein

   the tower sensing apparatus comprises a first processor, a first communication module, and a first sensing module configured to obtain tower status information of the communication tower; the antenna sensing apparatus comprises a second processor, a second communication module, and a second sensing module configured to obtain antenna status information of the antenna; and the first communication module and the first sensing module are both coupled to the first processor, the second communication module and the second sensing module are both coupled to the second processor, and the first communication module communicates with the second communication module.

2. The system according to claim 1, wherein the antenna sensing apparatus is disposed in a housing of a radome of the antenna, on an outer side of the housing, or on a top cover of the radome.

3. The system according to claim 1 or 2, wherein the tower sensing apparatus is disposed on a tower top of the communication tower.

4. The system according to any one of claims 1 to 3, wherein the first sensing module comprises at least one of the following: a first positioning module, a first barometric pressure sensing module, a first gravitational acceleration sensing module, a first temperature sensing module, a first humidity sensing module, a first smoke sensing module, a first air quality sensing module, a first wind speed sensing module, a first wind direction sensing module, a first rainfall sensing module, a first infrared sensing module, and a first vibration sensing module.

5. The system according to any one of claims 1 to 4, wherein the tower sensing apparatus further comprises a first information storage module and/or a first power module configured to provide electric energy for the tower sensing apparatus, and the first power module and/or the first information storage module are/is coupled to the first processor.

6. The system according to any one of claims 1 to 5, wherein the tower sensing apparatus further comprises a first data transmission interface configured to send the tower status information to a tower data center, wherein the first data transmission interface is coupled to the first processor.

7. The system according to claim 6, wherein the first data transmission interface sends the tower status information to the tower data center via a tower receiving terminal.

8. The system according to claim 6 or 7, wherein the first data transmission interface is a first wireless communication interface or a first wired communication interface.

9. The system according to claim 8, wherein when the first data transmission interface is the first wireless communication interface, the first wireless communication interface comprises at least one of the following: a ZigBee communication interface, a wireless fidelity interface, a Bluetooth communication interface, a mobile communication interface, a narrowband internet of things communication interface, and a long range radio communication interface.

10. The system according to claim 8, wherein when the first data transmission interface is the first wired communication interface, the first wired communication interface comprises at least one of the following: a recommended standard RS485 communication interface, a recommended standard RS232 communication interface, a controller area network communication interface, a universal serial bus communication interface, an ethernet communication interface, and an antenna interface standards group interface.

11. The system according to any one of claims 1 to 10, wherein the second sensing module comprises at least one of the following: a second positioning module, a second barometric pressure sensing module, a second gravitational acceleration sensing module, a second temperature sensing module, a second humidity sensing module, a second smoke sensing module, a second air quality sensing module, a second rainfall sensing module, a second wind speed sensing module, a second wind direction sensing module, a second infrared sensing module, and a second vibration sensing module.

12. The system according to any one of claims 1 to 11, wherein the antenna sensing apparatus further comprises a second information storage module and/or a second power module configured to provide electric energy for the antenna sensing apparatus, and the second power module and/or the second information storage module are/is coupled to the second processor.

13. The system according to any one of claims 1 to 12, wherein the antenna sensing apparatus further comprises a second data transmission interface configured to send the antenna status information to a base station management center, wherein the second data transmission interface is coupled to the second processor.

14. The system according to claim 13, wherein the second data transmission interface is a second wireless communication interface or a second wired communication interface.

15. The system according to claim 14, wherein when the second data transmission interface is the second wireless communication interface, the second wireless communication interface comprises at least one of the following: a ZigBee communication interface, a wireless fidelity interface, a Bluetooth communication interface, a mobile communication interface, a narrowband internet of things communication interface, and a long range radio communication interface.

16. The system according to claim 14, wherein when the second data transmission interface is the second wired communication interface, the second wired communication interface comprises at least one of the following: a recommended standard RS485 communication interface, a recommended standard RS232 communication interface, a controller area network communication interface, a universal serial bus communication interface, an ethernet communication interface, and an antenna interface standards group interface.

17. The system according to any one of claims 13 to 16, wherein the second data transmission interface sends the antenna status information to the base station management center via a remote radio unit and a baseband processing unit sequentially.

18. The system according to any one of claims 1 to 17, wherein the second processor is coupled to a remote electrical tilt control system of the antenna to obtain an antenna parameter of the antenna, and the second processor sends the antenna parameter to the tower sensing apparatus by using the second communication module.

19. The system according to any one of claims 1 to 18, wherein the first communication module and the second communication module are wireless communication modules or wired communication modules.

20. The system according to claim 19, wherein when the first communication module and the second communication module are the wireless communication modules, the wireless communication module comprises at least one of the following: a ZigBee communication module, a wireless fidelity module, a Bluetooth communication module, a mobile communication module, a narrowband internet of things communication module, and a long range radio communication module.

21. The system according to claim 19, wherein when the first communication module and the second communication module are the wired communication modules, the wired communication module comprises at least one of the following: a recommended standard RS485 communication module, a recommended standard RS232 communication module, a controller area network communication module, a universal serial bus communication module, and an ethernet communication module.

22. A tower sensing apparatus, wherein the tower sensing apparatus is disposed on a communication tower, and an antenna and an antenna sensing apparatus configured to obtain antenna status information of the antenna are further disposed on the communication tower; and
the tower sensing apparatus comprises a first processor, a first communication module, and a first sensing module configured to obtain tower status information of the communication tower, wherein the first communication module is configured to communicate with the antenna sensing apparatus, and the first communication module and the first sensing module are both coupled to the first processor.

23. An antenna sensing apparatus, wherein the antenna sensing apparatus is disposed on an antenna of a communication tower, and a tower sensing apparatus configured to obtain tower status information of the communication tower is further disposed on the communication tower; and
the antenna sensing apparatus comprises a second processor, a second communication module, and a second sensing module configured to obtain antenna status information of the antenna, wherein the second communication module is configured to communicate with the tower sensing apparatus, and the second communication module and the second sensing module are both coupled to the second processor.

FIG. 1a

FIG. 1b

EP 4 549 885 A1

FIG. 1c

FIG. 1d

101

First sensing module 203

First data transmission
interface 204

First processor 201

First communication
module 202

First power
module 205

First information
storage module 206

FIG. 2

102

Second sensing
module 303

Second data transmission
interface 304

Second processor
301

Second communication
module 302

Second power
module 305

Second information
storage module 306

FIG. 3

FIG. 4

FIG. 5

FIG. 6

700

701

Receive tower status information sent by a tower sensing apparatus

702

Send the tower status information to a base station management center

703

Obtain antenna status information

704

Obtain an antenna height above the ground based on a mounting height, a first barometric pressure value, a temperature, and a second barometric pressure value

FIG. 7

800

801

Obtain antenna status information

802

Send the antenna status information to a tower sensing apparatus

FIG. 8

| INTERNATIONAL SEARCH REPORT | International application No. |
|---|---|
| | **PCT/CN2023/098285** |

**A. CLASSIFICATION OF SUBJECT MATTER**

G01D21/02(2006.01)i;　H04N7/00(2011.01)i

According to International Patent Classification (IPC) or to both national classification and IPC

**B. FIELDS SEARCHED**

Minimum documentation searched (classification system followed by classification symbols)

G01D 21，H04N 7

Documentation searched other than minimum documentation to the extent that such documents are included in the fields searched

Electronic data base consulted during the international search (name of data base and, where practicable, search terms used)

CNTXT, DWPI, VEN, ENTXTC, CNKI: 天线, 铁塔, 信号塔, 基站, 通信, 无线, 感知, 监测, 检测, 传感器, 状态, 信息, 姿态, 位置, 风速, 风向, 振动, communicat+, iron towersens+, monitor+, wireless, information, stat+, position, wind

**C. DOCUMENTS CONSIDERED TO BE RELEVANT**

| Category* | Citation of document, with indication, where appropriate, of the relevant passages | Relevant to claim No. |
|---|---|---|
| PX | CN 218724323 U (HUAWEI TECHNOLOGIES CO., LTD.) 24 March 2023 (2023-03-24) claims 1-23 | 1-23 |
| PX | CN 218724322 U (HUAWEI TECHNOLOGIES CO., LTD.) 24 March 2023 (2023-03-24) claims 1-24 | 1-23 |
| X | CN 209134548 U (CHINA RAILWAY SIGNAL & COMMUNICATION SHANGHAI ENGINEERING BUREAU GROUP CO., LTD. et al.) 19 July 2019 (2019-07-19) description, paragraphs [0006]-[0046], and figures 1-6 | 1-23 |
| X | CN 207352409 U (GUANGZHOU XUJIE ELECTRONICS CO., LTD.) 11 May 2018 (2018-05-11) description, paragraphs [0003]-[0027], and figure 1 | 1-23 |
| A | CN 106932028 A (WUHAN ZHONGDIAN HUITONG TECHNOLOGY CO., LTD.) 07 July 2017 (2017-07-07) entire document | 1-23 |
| A | CN 209400702 U (CHINA UNITED NETWORK COMMUNICATIONS GROUP CO., LTD.) 17 September 2019 (2019-09-17) entire document | 1-23 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **28 September 2023** | **28 September 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/098285** |

**C.     DOCUMENTS CONSIDERED TO BE RELEVANT**

| Category* | Citation of document, with indication, where appropriate, of the relevant passages | Relevant to claim No. |
| --- | --- | --- |
| A | KR 20130094082 A (SB GIGONG CO., LTE. et al.) 23 August 2013 (2013-08-23)<br>entire document | 1-23 |

Form PCT/ISA/210 (second sheet) (July 2022)

**INTERNATIONAL SEARCH REPORT**
Information on patent family members

International application No.

**PCT/CN2023/098285**

| Patent document cited in search report | | | Publication date (day/month/year) | Patent family member(s) | | | Publication date (day/month/year) |
|---|---|---|---|---|---|---|---|
| CN | 218724323 | U | 24 March 2023 | None | | | |
| CN | 218724322 | U | 24 March 2023 | None | | | |
| CN | 209134548 | U | 19 July 2019 | None | | | |
| CN | 207352409 | U | 11 May 2018 | None | | | |
| CN | 106932028 | A | 07 July 2017 | None | | | |
| CN | 209400702 | U | 17 September 2019 | None | | | |
| KR | 20130094082 | A | 23 August 2013 | KR | 101311324 | B1 | 25 September 2013 |

Form PCT/ISA/210 (patent family annex) (July 2022)

**REFERENCES CITED IN THE DESCRIPTION**

**Patent documents cited in the description**

- CN 202210862253